# EUROPEAN PATENT APPLICATION

(11) **EP 4 604 338 A1**
(43) Date of publication of application: **20.08.2025**
(21) Application number: 24158172.7
(22) Date of filing: 16.02.2024
(51) Int. Cl.: H02G 3/12, H02G 3/08

(54) **INSTALLATION BOX ASSEMBLY FOR ELECTRIC WIRINGS**

(71) Applicant: ABB Schweiz AG, 5400 Baden (CH)
(72) Inventor: RENCKENS, Thomas Philippus, 3742 ND Baarn (NL); KOPPENOL, Arnoldus, 6713 KB Ede (NL); GOOR, Gerrit Klaas, 3772 NN Barneveld (NL)
(74) Representative: van Trier, Norbertus Henricus Gerardus

(57) **Abstract**

The invention relates to an installation box assembly configured for being installed in a floor and/or ceiling, in particular a hollow core slab, the installation box assembly comprising an installation box having an installation portion defined by a circumferential wall, wherein the circumferential wall defines an installation space therein for receiving electric installation material, and has an opening on at least one end thereof for providing access to installation space, wherein the installation box assembly further comprises an installation sleeve configured to be placed about the installation box, and having a sleeve wall of which the inner circumference is complementary to the outer circumference of the circumferential wall, and wherein the installation box and the installation sleeve are connected to each other in a releasable manner.

## Description

### BACKGROUND

The invention relates to an installation box assembly for electric wirings.

An installation box, for example, is known from the European patent publication EP 1 986 299, which describes a box for electric wirings, particularly a distribution junction box, comprising a circumferential wall defining a cavity for electric connections, which cavity at a first mounting side via a primary opening can be accessible for arranging the connections, wherein the box is provided with a number of secondary openings for connection to one or more installation pipes for passing the wires through to the cavity, wherein at least some of the primary and secondary openings are covered by one or more sheets of flexible puncturable material separately attached thereto.

### SUMMARY OF THE INVENTION

The known installation box may be used as a ceiling installation box, which may be installed in a concrete ceiling that may be formed by one or more hollow core slabs. A disadvantage of placing the known installation box in concrete is that the known installation box cannot be changed and/or replaced.

It is an object of the present invention to ameliorate or to eliminate one or more disadvantages of the known installation box, to provide an improved installation box or to at least provide an alternative installation box.

According to a first aspect, the invention provides an installation box assembly configured for being installed in a floor and/or ceiling, in particular a hollow core slab, the installation box assembly comprising an installation box having an installation portion defined by a circumferential wall, wherein the circumferential wall defines an installation space therein for receiving electric installation material, and has an opening on at least one end thereof for providing access to installation space,
wherein installation box assembly further comprises an installation sleeve configured to be placed about the installation box, and having a sleeve wall of which the inner circumference is complementary to the outer circumference of the circumferential wall, and
wherein the installation box and the installation sleeve are connected to each other in a releasable manner.

The installation box assembly according to the invention allows a user to install the installation sleeve with an inserted, for example empty, installation box into a hollow core slab at the hollow core slab factory. Simultaneously, before or after installing the installation box assembly into the hollow core slab, an electrician may install electric installation material, such as piping or cables with or without an adapter, into another installation box, wherein the installing may be performed at a location remote from the hollow core slab. The location remote from the hollow core slab, for example, may be at the workplace or the construction shack of the electrician. When the electric installation material is installed into the other installation box, the electrician may go to the building site where the hollow core slab is located, remove the inserted empty installation box, and insert the other installation box into the installation sleeve. This is advantageous, as the time needed by the electrician on the building site, where the hollow core slab is located, is reduced due to the electrician being able to replace the inserted installation box with another installation box into which at least the majority of the required electric installation material is installed.

Another advantage may be that the installation box with installed electric installation material may be removed from the hollow core slab, thereby making the hollow core slab reusable. This is advantageous, as it reduces the impact of the use of hollow core slabs on the environment.

In an embodiment, the circumferential wall and the sleeve wall are configured to be arranged concentrically with respect to each other, and/or
wherein the installation box further comprises a spout portion arranged at the end opposite to the end with the opening, wherein the spout portion comprises multiple spouts that are arranged parallel to each other and parallel to the longitudinal axis of the installation box, wherein the spouts are configured for providing access to the installation space.

In an embodiment, the installation box and the installation sleeve are connected to each other by means of a snap connection. In a further embodiment thereof, at least one first connecting member is provided at the installation box, and at least one second connecting member is provided at the installation sleeve. Preferably, the at least one first connecting member comprises a locking wall arranged at the installation box, and
wherein the at least one second connecting member comprises a locking nock arranged at the inner circumference of the sleeve wall. According to this embodiment, the installation box is kept in place within the installation sleeve by means of the snap connection. An advantage of this embodiment is that the installation box is kept in place when required, but it is also possible to remove the installation box from the installation sleeve when required, preferably in a relatively easily manner.

In an embodiment, the locking wall is arranged at the spout portion of the installation box, and has an octagonal shape with truncated corners. This is advantageous, as the electrician may simply pull the installation box out of the installation sleeve, when it is required to remove the installation box from the installation sleeve. Additionally, the octagonal shape may provide the advantage that the installation box may be inserted into the installation sleeve in a number of orientations, thereby reducing the risk of inserting the installation box in an incorrect manner.

In an embodiment, a groove is provided on both sides of the locking nock, which grooves extends in a direction parallel to the longitudinal axis of the installation box assembly.

In an embodiment, the installation box assembly further comprises a blocking mechanism configured for preventing the installation box and the installation sleeve from rotating with respect to each other about the longitudinal axis of the installation box assembly. By preventing the installation box and the installation box from rotation with respect to each other about the longitudinal axis, it is advantageously prevented that electric installation material is disconnected from the installation box assembly due to unwanted rotation of the installation box and installation sleeve with respect to each other.

In an embodiment, the blocking mechanism comprises at least one first blocking member provided at the installation box, and at least one second blocking member provided at the installation sleeve. In an embodiment thereof, the installation box comprises a transverse wall arranged at the end opposite to the end with the opening, and the at least one blocking member comprises a recess in the outer circumference of the transverse wall, and
wherein the at least one second blocking member comprises a wall recess in the outer circumference of the sleeve wall, which wall recess forms a wall cam at the inner circumference of the sleeve wall, which wall cam is configured to be received within the recess in the outer circumference of the transverse wall. An advantage of this embodiment is a reliable blocking of rotation of the installation box and the installation sleeve with respect to each other.

In an embodiment, the installation sleeve comprises a securing rib arranged at the outer circumference thereof. In an embodiment thereof, the securing rib is orientated at an angle with respect to a plane extending transversal to the longitudinal axis and to the installation sleeve. According to this embodiment, the securing rib corresponds to a part of a thread, which allows the installation sleeve to be removed from the hollow core slab when required.

In an embodiment, the installation sleeve comprises a securing groove arranged at the outer circumference thereof. The securing groove preferably thins the sleeve wall on the spot of the securing rib, such that the securing rib may move inward when rotating the installation sleeve around the longitudinal axis to remove the installation sleeve from the hollow core slab.

According to a second aspect, the invention provides an installation sleeve and/or installation box as defined and/or described in relation to the first aspect of the invention.

The installation sleeve and/or the installation box according to the invention provide at least the same technical advantages as described in relation to the first aspect of the invention.

According to a third aspect, the invention provides a method for installing an installation box assembly according to the first aspect of the invention in a floor and/or ceiling, in particular a hollow core slab, wherein the method comprises the following steps:
providing an installation box assembly according to the first aspect of the invention;
installing the installation sleeve in the floor and/or ceiling, in particular the hollow core slab, while the installation sleeve comprises an inserted installation box and/or a padding configured for maintaining the shape of the installation sleeve;
installing electric installation material in the installation space of another installation box at a location remote from the floor and/or ceiling, in particular the hollow core slab; and
replacing the installation box and/or padding inserted into the installation sleeve by the installation box with the electric installation material installed therein.

The method according to the invention provides at least the same technical advantages as described in relation to the first aspect of the invention.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows an isometric view of an installation box assembly according to an embodiment of the invention;
Figure 2 shows an exploded view of the installation box assembly of figure 1 having an installation box and an installation sleeve;
Figure 3 shows an isometric view of the installation box of figure 2; and
Figures 4A and 4B show a side view and a cross-sectional view of the installation sleeve of figure 2.

### DETAILED DESCRIPTION OF THE INVENTION

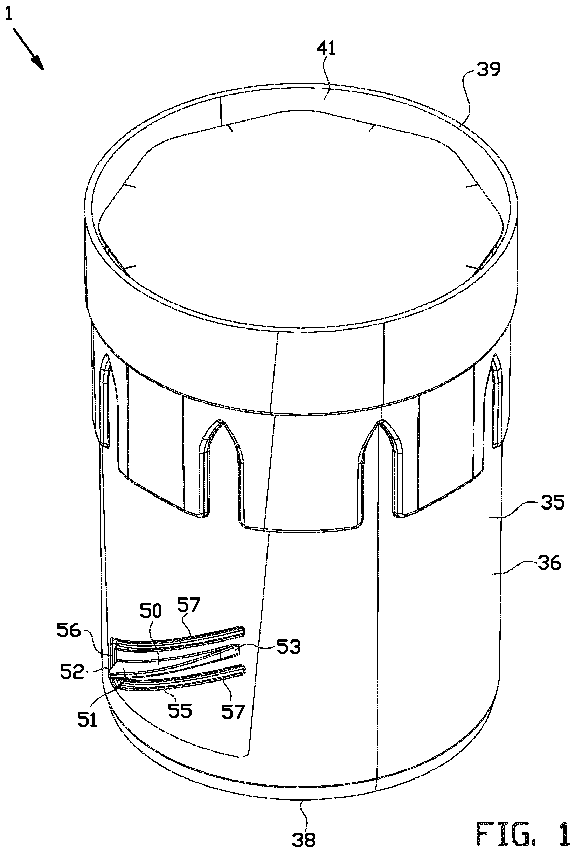

An isometric view of an installation box assembly 1 according to an embodiment of the invention is shown in figure 1. The installation box assembly 1, for example, may be installed in a ceiling that is formed by means of a hollow core slab.

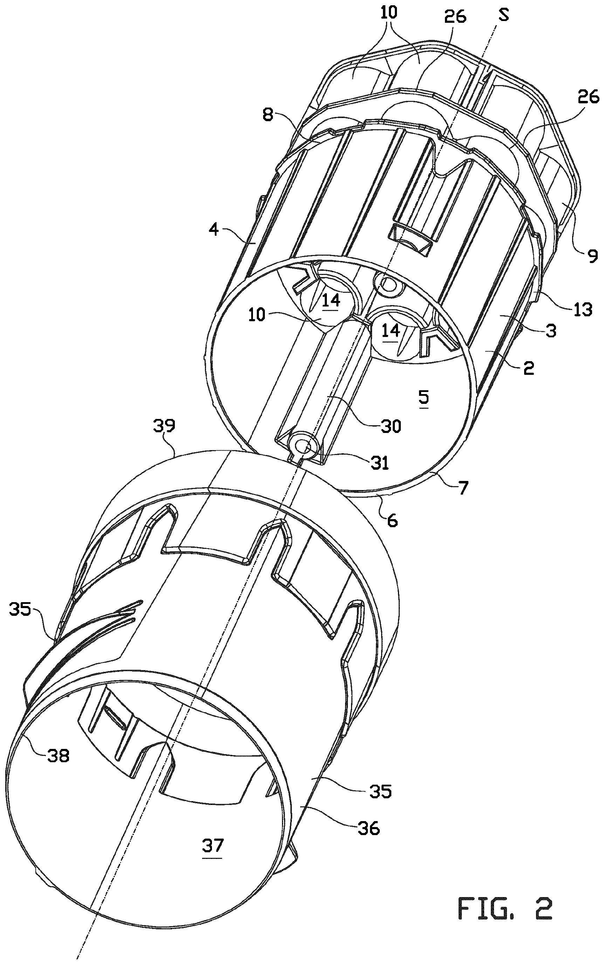

An exploded view of the installation box assembly 1 is shown in figure 2. As shown, the installation box assembly 1 comprises an installation box 2. The installation box 2 has a substantially cylindrical shape with a longitudinal axis S, wherein the installation box 2 has a cylindrical portion 3 defined by a circumferential wall 4. The circumferential wall 4 defines and encloses an installation space 5 therein, which installation space is configured for receiving electric installation material, such as piping or cables with or without an adapter. The circumferential wall 4 has a first end edge 6, located at the so-called mounting end, which bounds an opening 7 configured for providing access to the installation space. As shown in figure 2, at least one mounting bush 30 is integrally formed at the inner circumference of the circumferential wall 4, which extends substantially parallel to the longitudinal direction S. A mounting nut 31 is accommodated within the mounting bush 30, in this case a bush with internal thread, in which a not shown attachment bolt may be screwed for attaching an electric component to the installation box assembly 1, in particular the installation box 2 thereof.

Opposite to the first end edge 6, when seen in the longitudinal direction S, the circumferential wall 4 comprises a second end edge 8 at which a spout portion 9 is arranged. The spout portion 9 comprises multiple spouts 10 that are arranged parallel to each other and parallel to the longitudinal axis of the installation box 2, wherein the spouts 10 are connected to each other. Additionally, the spouts 10 are orientated perpendicular to the opening 7. The spouts 10 are configured for providing access to the installation space 5.

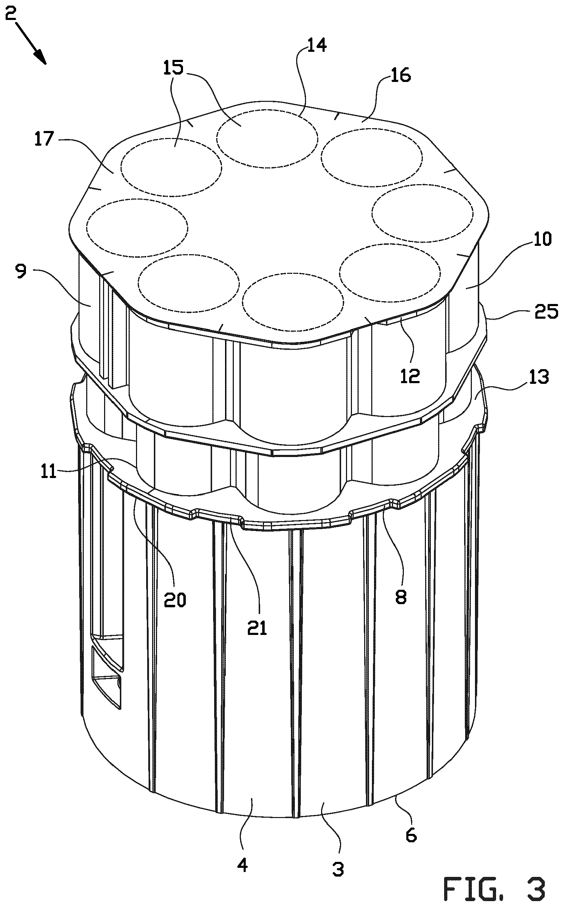

As best shown in figure 3, the spout portion 9 has a first end 11 that is directed towards the cylindrical portion 3, and a second end 12, opposite to the first end 11 when seen in the longitudinal direction S, and facing away from the cylindrical portion 3. A transverse wall 13 is formed at the transition from the spout portion 9 to the cylindrical portion 3. The transverse wall 13 has openings at the locations of the spouts 10, such that the spout channels 14 are in open connection with the installation space 5.

At the second end 12, the spouts 10 define end edges 14 that define spout openings 15. The spout openings 15 are arranged within an end wall 16. As schematically indicated in figure 3, a puncturable sticker 17 is arranged on top of the end wall 16, which puncturable sticker 17 is configured for closing off the spout openings 15 and for being punctured when a respective spout 10 needs to be used.

The transverse wall 13, as shown in figure 3, has a substantially circular cross-section and a circumferential edge 20. The circumferential edge 20 has multiple recesses 21, in particular tapering recesses, that are extending radially inwards from the circumferential edge 20.

As shown in figures 2 and 3, a further transverse wall 25 is arranged at the spout portion 9 between the first end 11 and the second end 12, wherein the further transverse wall 25 is substantially parallel to the transverse wall 13. The further transverse wall 25 is also open at the locations where the spouts 10 pass through the further transverse wall 25. When seen from above or below, *i.e.* in a direction parallel to the longitudinal direction, the further transverse wall 25 has an octagonal shape with truncated corners 26. The truncated corners 26 are offset with respect to the recesses 21 of the transverse wall 13 when seen from above or below, such that each of the truncated corners 26 is placed between two neighboring recesses 21 when seen from above or below and in a direction parallel to the longitudinal direction S.

As best shown in figures 1 and 2, the installation box assembly 1 further comprises an installation sleeve 35. The installation sleeve 35 is configured for being positioned around and being connected to the installation box 2. The installation sleeve 35 is substantially cylindrical shaped and has a cylindrical sleeve wall 36, which defines a cylindrical sleeve space 37 therein. The sleeve space 37 is configured for accommodating the installation box 2 therein, such that the installation sleeve 35 and the installation box 2 are concentrical with respect to each other.

As shown in figures 1 and 2, the cylindrical sleeve wall 36 has a first sleeve end edge 38, and a second sleeve end edge 39 opposite to the first sleeve end edge 38 in the longitudinal direction S. The first sleeve end edge 38 bounds a first insert opening 40, and the second end edge 39 bounds a second insert opening 41. Both of the first and second insert openings 40, 41 provide access to the sleeve space 37, for example, to insert the installation box 2 into the sleeve space 37.

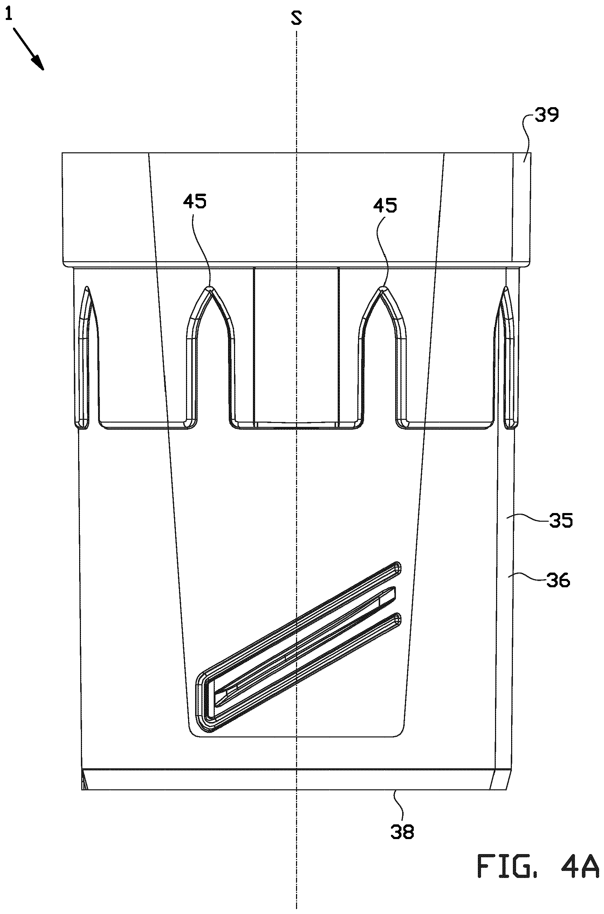

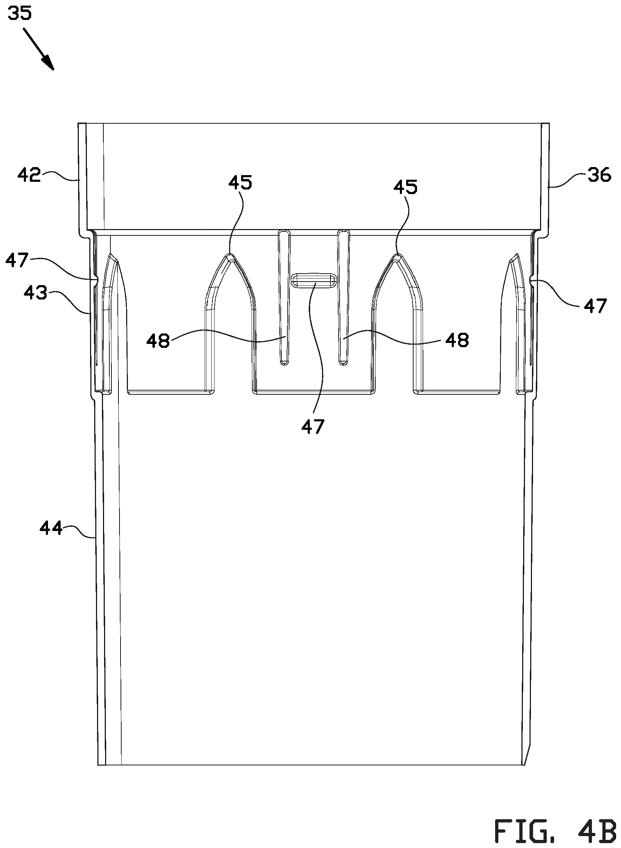

The cylindrical sleeve wall 35, as best shown in figures 4A and 4B, in the direction from the second sleeve end edge 39 to the first sleeve end edge 38, comprises in series a first wall portion 42, a second wall portion 43, and a third wall portion 44. The first wall portion 42 has a first diameter, and merges into the second wall portion 43 via a first diameter step, wherein the second wall portion 43 has a second diameter that is smaller than the first diameter. The second wall portion 43 merges into the third wall portion 44 via a second diameter step, wherein the third wall portion 44 has a third diameter that is smaller than the second diameter.

The second wall portion 43 has a plurality of wall recesses 45, defined as second blocking members, regularly divided over the outer circumference of the second wall portion 43. Each of the wall recesses 45 extends in a direction parallel or substantially parallel to the longitudinal direction S of the installation box assembly 1, wherein each of the wall recesses 45 is substantially pencil shaped of which pencil shape the sharp point is directed towards the second sleeve end edge 39. At the inner circumference of the sleeve wall 36, the wall recesses form wall cams 45. The number of wall recesses 45 corresponds to the number of recesses 21, defined as first blocking members, of the transverse wall 13, and the recesses 21 are configured for receiving the wall cams 45 such that rotation of the installation box 2 and the installation sleeve 35 with respect to each other is prevented.

Furthermore, as shown in figure 4B, a number of, in particular four, locking nocks 47 are provided at the inner circumference of the second wall portion 43, which locking nocks 47 are distributed regularly over the inner circumference of the second wall portion 43. The locking nocks 47 are provided at a first height, when seen from the first sleeve end edge 38, wherein the further transverse wall 25 is arranged at a second height from the first end edge 6. The second height is slightly smaller than the first height, such that the locking nocks 47 are located just above the further transverse wall 25, also called a locking wall, in particular the truncated corners 26 thereof. When the installation box 2 is inserted into the installation sleeve 35, the locking nocks 47 prevent the installation box 2 from moving out of the installation sleeve 35, at least in a direction towards the second sleeve end edge 39.

Besides each of the locking nocks 47, two grooves 48 are provided in the inner circumference of the second wall portion 43. Each of the grooves 48 extends from the first diameter step towards the second diameter step. Due to the grooves 48, the second wall portion 43, in particular on the spot, is sufficient elastic to install, in particular to click, the installation box 2 into the installation sleeve.

As shown in figure 1, the outer circumference of the sleeve wall 36, in particular the third portion thereof, is provided with one or more securing ribs 50. Each of the ribs 50 is orientated at an angle with respect to a plane extending transverse to the longitudinal axis S and to the installation sleeve 35. Each of the ribs 50 comprises an elongated body 51 with a first end 52 and a second end 53 opposite thereof. The height of the ribs 50 first increases and subsequently decreases gradually in the direction from the first end 52 to the second end 53, wherein the width of ribs decreases in a radial direction away from the installation sleeve 35.

Furthermore, U-shaped securing grooves 55 are provided at the outer circumference of the sleeve wall 36 and adjacent to the securing ribs 50. Each of the grooves 55 has a bottom part 56 and two leg parts 57 standing upright from the bottom part 56. The leg parts 57 are arranged parallel to the respective securing rib 50, wherein the bottom part 56 is located near the first end 52 of the respective securing rib 50.

The securing ribs 50 are configured for securing the installation sleeve 35 with respect to the not shown floor, in particular a hollow core slab, in such manner that the installation sleeve 35 may be removed from the hollow core slab by rotating the installation sleeve 35 about the longitudinal axis S thereof.

The securing grooves 55 are provided for thinning the sleeve wall 36 on the spot of the securing ribs 50, such that the securing ribs 50 may move inward when rotating the installation sleeve 35 left around the longitudinal axis S. Optionally, the sleeve wall 36 may tear at the spot of the securing ribs 50.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Installation box assembly configured for being installed in a floor and/or ceiling, in particular a hollow core slab, the installation box assembly comprising an installation box having an installation portion defined by a circumferential wall, wherein the circumferential wall defines an installation space therein for receiving electric installation material, and has an opening on at least one end thereof for providing access to installation space,
wherein the installation box assembly further comprises an installation sleeve configured to be placed about the installation box, and having a sleeve wall of which the inner circumference is complementary to the outer circumference of the circumferential wall, and
wherein the installation box and the installation sleeve are connected to each other in a releasable manner.

2. Installation box assembly according to claim 1, wherein the circumferential wall and the sleeve wall are configured to be arranged concentrically with respect to each other, and/or
wherein the installation box further comprises a spout portion arranged at the end opposite to the end with the opening, wherein the spout portion comprises multiple spouts that are arranged parallel to each other and parallel to the longitudinal axis of the installation box, wherein the spouts are configured for providing access to the installation space.

3. Installation box assembly according to claim 1 or 2, wherein the installation box and the installation sleeve are connected to each other by means of a snap connection.

4. Installation box assembly according to claim 3, wherein at least one first connecting member is provided at the installation box, and at least one second connecting member is provided at the installation sleeve.

5. Installation box assembly according to claim 4, wherein the at least one first connecting member comprises a locking wall arranged at the installation box, and
wherein the at least one second connecting member comprises a locking nock arranged at the inner circumference of the sleeve wall.

6. Installation box assembly according to claims 2 and 5, wherein the locking wall is arranged at the spout portion of the installation box, and has an octagonal shape with truncated corners.

7. Installation box assembly according to claim 5 or 6, wherein a groove is provided on both sides of the locking nock, which grooves extends in a direction parallel to the longitudinal axis of the installation box assembly.

8. Installation box assembly according to any one of the preceding claims, further comprising a blocking mechanism configured for preventing the installation box and the installation sleeve from rotating with respect to each other about the longitudinal axis of the installation box assembly.

9. Installation box assembly according to claim 8, wherein the blocking mechanism comprises at least one first blocking member provided at the installation box, and at least one second blocking member provided at the installation sleeve.

10. Installation box according to claim 9, wherein the installation box comprises a transverse wall arranged at the end opposite to the end with the opening, and the at least one blocking member comprises a recess in the outer circumference of the transverse wall, and
wherein the at least one second blocking member comprises a wall recess in the outer circumference of the sleeve wall, which wall recess forms a wall cam at the inner circumference of the sleeve wall, which wall cam is configured to be received within the recess in the outer circumference of the transverse wall.

11. Installation box assembly according to any one of the preceding claims, wherein the installation sleeve comprises a securing rib arranged at the outer circumference thereof.

12. Installation box assembly according to claim 11, wherein the securing rib is orientated at an angle with respect to a plane extending transversal to the longitudinal axis and to the installation sleeve.

13. Installation box assembly according to any one of the preceding claims, wherein the installation sleeve comprises a securing groove arranged at the outer circumference thereof.

14. Installation sleeve and/or installation box as defined and/or described in one of the preceding claims.

15. Method for installing an installation box assembly according to any one of the preceding claims 1 - 13 in a floor and/or ceiling, in particular a hollow core slab, wherein the method comprises the following steps:
providing an installation box assembly according to any one of the claims 1 - 13;
installing the installation sleeve in the floor and/or ceiling, in particular the hollow core slab, while the installation sleeve comprises an inserted installation box and/or a padding configured for maintaining the shape of the installation sleeve;
installing electric installation material in the installation space of another installation box at a location remote from the floor and/or ceiling, in particular the hollow core slab; and
replacing the installation box and/or padding inserted into the installation sleeve by the installation box with the electric installation material installed therein.
